(19) **Europäisches Patentamt / European Patent Office / Office européen des brevets**

(11) **EP 3 974 382 A1**

(12) # EUROPEAN PATENT APPLICATION
published in accordance with Art. 153(4) EPC

(43) Date of publication:
**30.03.2022 Bulletin 2022/13**

(21) Application number: **19943659.3**

(22) Date of filing: **02.09.2019**

(51) International Patent Classification (IPC):
**C01B 32/80** (2017.01)   **B01J 27/224** (2006.01)
**C02F 1/16** (2006.01)

(52) Cooperative Patent Classification (CPC):
**B01J 27/224; C01B 32/80; C02F 1/04; C02F 1/16; C25B 1/26**

(86) International application number:
**PCT/CN2019/104073**

(87) International publication number:
**WO 2021/035768 (04.03.2021 Gazette 2021/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.08.2019 CN 201910813614**

(71) Applicants:
• **Wanhua Chemical Group Co., Ltd.**
  **Yantai, Shandong 264006 (CN)**
• **Wanhua Chemical (Ningbo) Co., Ltd.**
  **Ningbo, Zhejiang 315812 (CN)**

(72) Inventors:
• **WEN, Fang**
  **Yantai, Shandong 264006 (CN)**

• **ZHAO, Dongke**
  **Yantai, Shandong 264006 (CN)**
• **WU, Xuefeng**
  **Yantai, Shandong 264006 (CN)**
• **MA, Haiyang**
  **Yantai, Shandong 264006 (CN)**
• **ZHANG, Hongke**
  **Yantai, Shandong 264006 (CN)**
• **ZHAO, Nan**
  **Yantai, Shandong 264006 (CN)**
• **DONG, Chao**
  **Yantai, Shandong 264006 (CN)**
• **CHEN, Liangjin**
  **Yantai, Shandong 264006 (CN)**
• **XU, Dan**
  **Yantai, Shandong 264006 (CN)**

(74) Representative: **Cabinet Laurent & Charras**
**Le Contemporain**
**50 Chemin de la Bruyère**
**69574 Dardilly Cedex (FR)**

(54) **PHOSGENE SYNTHESIS AND BRINE EVAPORATION ELECTROLYSIS INTEGRATED TREATMENT PROCESS**

(57)    The present disclosure provides a phosgene synthesis and brine evaporation electrolysis integrated treatment process, comprising the following steps: 1) introducing premixed CO and chlorine to a primary phosgene synthesis tower to be synthesized into phosgene, the primary phosgene synthesis tower being provided with a heat transfer agent circulation space, and the heat transfer agent circulating in the heat transfer agent circulation space; 2) introducing the heat transfer agent, which absorbs reaction heat, in the heat transfer agent circulation space to a steam generator, exchanging heat with water to generate superheated steam, and returning the heat-exchanged heat transfer agent to the heat transfer agent circulation space for further absorbing the reaction heat generated by phosgene synthesis; 3) supplying the superheated steam to a brine evaporation concentration device, the brine evaporation concentration device performing evaporation concentration on brine by using the superheated steam as a heat source; and 4) electrolyzing the strong brine or dry salt obtained in step 3) to generate chlorine. The phosgene synthesis and brine evaporation electrolysis integrated treatment process can realize rational utilization of energy and resource utilization of effluent brine.

FIG. 2

**Description**

TECHNICAL FIELD

The present disclosure relates to a phosgene synthesis and brine evaporation electrolysis integrated treatment process.

BACKGROUND

The phosgene synthesis process is usually implemented by employing activated carbon to catalyze synthesis reaction. A large amount of reaction heat accompanies the synthesis reaction, and for every ton of phosgene synthesized, more than 300000 kilocalories of heat can be generated. The heat is usually removed with water, chlorobenzene, heat transfer oil, etc. In the process of heat removal, the thermal conductivity of activated carbon is poor, and the temperature difference in the radial direction and the axial direction is large, which leads to the existence of hot spots with high temperatures of 500°C to 600°C and easily causes the pulverization of activated carbon. In order to avoid the excessive temperature of hot spots, the reaction temperature is usually low, and the removed heat is finally carried away with circulating water, which leads to the problems of energy waste and large consumption of circulating water.

According to the published patent report, there are usually the following methods to solve the problem of activated carbon pulverization.

Chinese published patent CN104415770A describes that a catalyst with an activated carbon coating/foam silicon carbide structure is subjected to surface modification by alkali metal salt to reduce the temperature difference of the catalyst bed layer in the radial direction and the axial direction.

Chinese published patent CN1765740A describes a shell-and-tube reactor, which reduces hot spot temperature and activated carbon pulverization by sufficient heat dissipation.

To sum up, in the existing art, for the problem of activated carbon pulverization, in order to avoid the excessive temperature of hot spots, the reaction heat is usually carried away with circulating water of about 30°C, and finally, the energy is consumed in a cooling tower, which leads to the problems of energy waste and large consumption of circulating water. This proposed solution has limitations and cannot achieve energy reuse; or the adopted catalyst prepared by special processing has some defects such as complicated transformation process, ease of shedding when the catalyst is attached in a special manner, and inability to run for a long period. In addition, the chemical industry park usually limits the total discharge amount of brine, the condensed brine occupies a large amount of discharged quotas, which restricts the overall operation of each device in the park, and TOC removal is required before the brine is discharged, which requires cost consumption; moreover, the salt concentration in the discharged brine is high, which causes serious waste of salt resources. It is necessary to develop a recycling, green process to replace the existing process, so as to solve the problems of heat waste in phosgene synthesis and condensed brine discharge.

SUMMARY

In view of the above-mentioned problems, the present disclosure provides a phosgene synthesis and brine evaporation electrolysis integrated treatment process which can achieve rational utilization of energy and resource utilization of effluent brine, thereby achieving overall circular economy and zero emission.

To achieve the preceding object, the present disclosure provides the technical solutions described below.

The present disclosure provides a phosgene synthesis and brine evaporation electrolysis integrated treatment process including the following steps:

1) introducing premixed CO and chlorine to a primary phosgene synthesis tower, and reacting CO and chlorine to synthesize phosgene under the action of a catalyst; where the primary phosgene synthesis tower is provided with a heat transfer agent circulation space, a heat transfer agent circulates in the heat transfer agent circulation space for absorbing reaction heat generated in phosgene synthesis, and the catalyst is activated carbon or high thermal conductivity composite activated carbon, preferably high thermal conductivity composite activated carbon; 2) introducing the heat transfer agent, which absorbs the reaction heat, in the heat transfer agent circulation space to a steam generator, exchanging heat with water to be converted into steam to generate superheated steam, and returning the heat transfer agent which has exchanged heat with the water to be converted into steam to the heat transfer agent circulation space of the primary phosgene synthesis tower for further absorbing the reaction heat generated in phosgene synthesis;

3) supplying the superheated steam obtained in step 2) to a brine evaporation and concentration device, and performing, through the brine evaporation and concentration device, evaporation and concentration on brine by using the superheated steam as a heat source to obtain strong brine; optionally, the strong brine is crystallized to obtain dry salt; and

4) electrolyzing the strong brine or dry salt obtained in step 3) to generate chlorine; in some embodiments, the strong brine or dry salt is adjusted to a saturated brine (the mass concentration of the saturated brine is, for example, 23%), and then the saturated brine is electrolyzed to produce chlorine.

In some embodiments, in step 1), a mixed gas which is obtained in the primary phosgene synthesis tower and includes the phosgene is inputted into a secondary phosgene synthesis tower for further reaction to completely convert the remaining chlorine into phosgene. In some embodiments, the reaction heat is removed with circulating water in the secondary phosgene synthesis tower, and the reaction heat removal with circulating water is the conventional heat transfer method in the art.

In some embodiments, the catalyst and an inert agent which are evenly mixed are loaded in a catalyst loading area (such as tubes) in each of the primary phosgene synthesis tower and the secondary phosgene synthesis tower, and the material of the inert agent is selected from one or at least two of silicon carbide, alumina or graphite, preferably silicon carbide.

An appearance shape of the inert agent may be square columnar, cylindrical, spherical, star cone-shaped, spindle-shaped, intalox saddle-shaped, star-shaped or other shapes, preferably, a surface of the inert agent is provided with one or more (for example, more than two, such as two, three, four, etc.) acute-angled tips to make the inert agent, for example, star cone-shaped, spindle-shaped, star-shaped, etc., and more preferably, the surface of the inert agent is distributed with multiple acute-angled tips (for example, to make the inert agentstar-shaped); the equivalent diameter of the inert agent is preferably 1 mm to 20 mm (such as 1 mm, 3 mm, 5 mm, 8 mm, 10 mm, 12 mm, 13 mm, 15 mm, 20 mm, etc.), preferably, 8 mm to 15 mm.

The inventors have found that the use of an inert agent (for example, an inert agent in the shape of star cone, spindle or star or other shapes with acute-angled tips) with one or more (preferably more than two) acute-angled tips on the surface can reduce the contact probability between catalysts, improve the heat transfer efficiency, and reduce the hot spot temperature, thereby prolonging the catalyst lifetime. To achieve better effect, the inert agent and the catalyst are loaded in a preferred loading ratio (the volume of the inert agent accounts for 0.1 to 0.9 of the total volume of the inert agent and the catalyst, such as 0.1, 0.3, 0.5, 0.7, and 0.9, preferably 0.7 to 0.85). With the use of an inert agent in a preferred shape and a loading mode in a preferred ratio, the heat transfer in the phosgene synthesis tower can be improved, for example, the heat transfer in the phosgene synthesis tower is performed in a manner of catalyst-inert agent-tube rather than a manner of catalyst-inert agent-catalyst-inert agent-catalyst-inert agent-tube, which minimizes the unconnected area of the inert agent, thereby improving the heat transfer efficiency, reducing the temperature of hot spots, and prolonging the catalyst lifetime; meanwhile, the heat transfer agent with high temperature can be obtained at the outlet of the heat transfer agent circulation space, providing sufficient heat source for subsequent steam generation.

In a preferred embodiment of the present disclosure, in step 1), the high thermal conductivity composite activated carbon is preferably used as the catalyst in the primary phosgene synthesis tower. The high thermal conductivity composite activated carbon includes a particle additive and activated carbon, the mass ratio of the particle additive to the activated carbon is (1 to 10):100 (such as 1:100, 3:100, 5:100, 6:100, 7:100, 8:100, 10:100, etc.), preferably, (3 to 6):100, and the particle additive is selected from one or at least two of alumina, silicon carbide, graphite and boron carbide, preferably, alumina and/or silicon carbide. The high thermal conductivity composite activated carbon is prepared by a method specifically including the following steps: evenly mixing activated carbon powder, a particle additive, and an adhesive in water, drying and molding the mixture (into a required shape according to requirements), and carbonizing the molded mixture at a constant temperature with water vapor at 600°C to 800°C (such as 600°C, 650°C, 700°C, 750°C, 800°C, etc.) for 1 h to 10 h (such as 1 h, 2 h, 5 h, 8 h and 10 h). With the use of the high thermal conductivity composite activated carbon, which is obtained with such specific compositions and process, as the catalyst, the heat transfer efficiency of reaction heat can be improved, and the characteristics of few hot spots and low hot spot temperature can still be maintained when the heat transfer agent operates at high temperature. However, for the existing catalysts, such as conventional activated carbon catalysts, if the heat transfer temperature is controlled to be high during the heat transfer process, the hot spot temperature will raise, which results in the pulverization of activated carbon, thereby greatly shortening the service life of the activated carbon and affecting the operation of the device. Further preferably, the mass ratio of the adhesive to the activated carbon powder is (3 to 20): 100 (such as 3:100, 5:100, 10:100, 15:100, 20:100, etc.), and the mass ratio of the activated carbon powder to water is (20 to 50):100 to the convenience of molding. The adhesives used herein may be, for example, emulsified phenolic resin, activated clay, emulsified coal tar, carboxymethylcellulose, etc.

An appearance shape of the catalyst user herein may be common shapes in the art, such as cylinder, sphere, square column, spindle, star cone, etc., preferably cylinder; preferably, the equivalent diameter of the catalyst is 1 mm to 10 mm (such as 1 mm, 3 mm, 5 mm, 7 mm, 9 mm, 10 mm, etc.), preferably, 5 mm to 10 mm.

In the present disclosure, the equivalent diameter, such as the equivalent diameter of the catalyst or the inert agent, refers to the circumscribed circle diameter thereof, for example, the equivalent diameter of a star-shaped inert agent refers to the circumscribed circle diameter of the inert agent; and for spherical inert agents and catalysts, the equivalent diameter thereof refers to the diameter of the sphere itself. The volume of the inert agent is calculated based on its equivalent diameter, for example, for star-shaped inert agents, the volume thereof is calculated based on the volume of the circumscribed circle of the inert agent; the volume of the catalyst is also calculated in this way.

The high thermal conductivity composite activated carbon is preferably used in the phosgene synthesis tower, and when cooperating with the inert agent and the catalyst that are in specific shapes and loaded in a specific ratio, can solve the problems of pulverization of the catalyst and short operation period in phosgene synthesis, further prolonging the catalyst lifetime and reducing hot spot temperature. Since a long operation period can be achieved, the repeated start-up and shut-down can be avoided, and by using the reaction heat of phosgene synthesis, the by-product superheated steam can be stably generated. Since the heat can be efficiently transferred, a heat transfer agent with a high temperature can be obtained at the outlet of the heat transfer agent circulation space to ensure the supply of heat source. With the coupling of phosgene synthesis with steam generation and brine concentration, the effluent brine is evaporated and concentrated with superheated steam, which reduces the discharge of effluent brine, and the strong brine obtained after evaporation or dry salt optionally obtained by crystallizing the strong brine is further used for electrolysis to generate chlorine, which leads to the integration of phosgene synthesis, brine treatment and chlor-alkali industry three high-consumption processes in diphenylmethane diisocyanate (MDI) production, resulting in rational utilization of energy and resource utilization of effluent brine and achieving overall circular economy and zero emission.

In some embodiments, in step 1), the heat transfer agent is selected from water, chlorobenzene, toluene, decalin, high temperature silicone oil or high temperature mineral oil, preferably high temperature silicone oil or decalin. The high temperature silicone oil or the high temperature mineral oil herein refers to high temperature silicone oil or high temperature mineral oil which is resistant to temperatures above 220°C.

In the present disclosure, the heat transfer agent removes the reaction heat by rising the temperature of the liquid heat transfer agent or gasifying the liquid heat transfer agent into a gas, preferably by gasifying the liquid heat transfer agent into a gas. In some embodiments, in step 2), the heat transfer agent which absorbs the reaction heat and is outputted from the heat transfer agent circulation space is at a temperature of 130°C to 265°C, such as 130°C, 150°C, 180°C, 190°C, 200°C, 210°C, 220°C, etc., preferably 190°C to 220°C, and at a pressure of -0.5 barg to 5 barg, such as -0.5 barg, 1 barg, 3 barg, 5 barg, etc.

The heat exchange between the heat transfer agent and the water to be converted into steam is performed by lowering the temperature of the heat transfer agent or by liquefying the gas heat transfer agent into a liquid. In some embodiments, in step 2), the superheated steam is at a pressure of 2 barg to 35 barg, such as 2 barg, 5 barg, 8 barg, 9 barg, 10 barg, 15 barg, 20 barg, 25 barg, 30 barg, 35 barg, etc., preferably 8 barg to 10 barg, and at a temperature of 150°C to 260°C, such as 150°C, 180°C, 190°C, 200°C, 230°C, 260°C, etc., preferably 180°C to 200°C.

In some embodiments, the volume ratio of CO to chlorine in step 1) is 1.01 to 1.10, preferably 1.015 to 1.03.

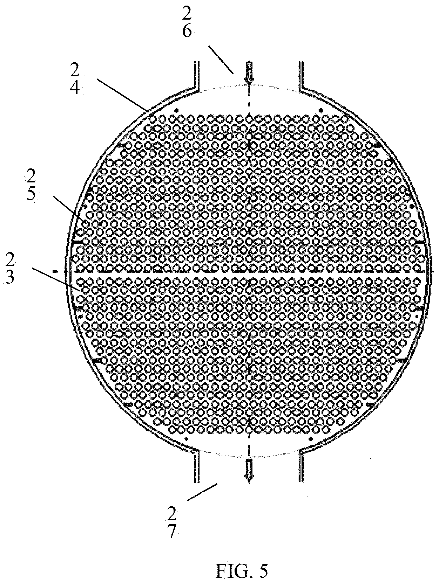

In some embodiments, in step 1), the primary phosgene synthesis tower and the secondary phosgene synthesis tower are tubular phosgene synthesis towers with a tubular diameter of 20 mm to 80 mm, a tubular spacing of 25 mm to 100 mm, and a tubular length of 3000 mm to 4500 mm. The catalyst and the inert agent are loaded in tubes, and free space between the tubes and free space between the tubes and the tower wall of the primary phosgene synthesis tower (that is, the space surrounding the tubes in the phosgene synthesis tower) serve as the heat transfer agent circulation space. The tubes and a medium circulation space surrounding the tubes are the conventional structure of the phosgene synthesis tower in the art (see FIG. 5), but the difference of the present disclosure is that the medium circulation space serves as the heat transfer agent circulation space. The heat transfer agent circulates between the heat transfer agent circulation space and the steam generator. The loading amount of the catalyst may be determined by those skilled in the art according to requirements, for example, the catalyst and the inert agent that are mixed in a required ratio fill the tubes to the full.

In some embodiments, in step 1), the primary phosgene synthesis tower is at a temperature of 55°C to 270°C, such as 55°C, 100°C, 150°C, 200°C, 210°C, 220°C, 230°C, etc., preferably 200°C to 230°C, and at a pressure of 2.5 barg to 5.5 barg, such as 2.5 barg, 3.0 barg, 3.5 barg, 4.0 barg, 4.5 barg, 5.5 barg, etc., preferably 2.5 barg to 3.5 barg; the secondary phosgene synthesis tower is at a temperature of 50°C to 60°C and at a pressure of 2.5 barg to 5.5 barg.

In some embodiments, in step 1), the free chlorine concentration at an outlet of the primary phosgene synthesis tower is 50 ppm to 3%, and the free chlorine concentration at an outlet of the secondary phosgene synthesis tower is 20 ppm to 50 ppm. The free chlorine concentration refers to the mass concentration.

In some embodiments, in step 3), the brine is effluent brine, such as condensed brine which is generated in condensation reaction and whose aqueous layer is separated or phosgenation brine formed by neutralizing an alkali liquor discharged from an alkali liquor absorption tower, specifically, for example, effluent brine generated in the production of MDI.

In some embodiments, the mass concentration of sodium chloride in the condensed brine is 10% to 20%, the mass concentration of sodium hydroxide is 0.5% to 3%, and the mass concentration of sodium chloride in the phosgenation brine is 1% to 15%.

In some embodiments, in step 3), the evaporation and concentration are performed by using evaporation and concentration techniques well known in the art, such as double-effect evaporation, wherein a primary evaporation may be performed at a temperature of 50°C to 130°C and at a pressure of 0.1 bara to 3.0 bara, and the secondary evaporation may be performed at a temperature of 35°C to 100°C and at a pressure of 0.05 bara to 1.0 bara.

In some embodiments, in step 3), a to-be-concentrated brine which is to be supplied to the brine evaporation and concentration unit is pre-neutralized in a neutralization tank, and an acid used for neutralization is, for example, hydrochloric acid or pure HCl gas. The temperature of the neutralization tank is, for example, 40°C to 80°C and the pressure is, for example, 0 barg to 0.5 barg. The mass concentration of sodium chloride in the brine neutralized in the neutralization tank is 4% to 23%.

The catalyst lifetime is evaluated by using a method well known to those skilled in the art. For example, in Examples and Comparative Examples of the present disclosure, when the consumption of circulating water in the secondary phosgene synthesis tower increases by more than 5% and the temperature of circulating water rises by more than 0.5°C, it shows that there is a great deal of phosgene conversion in the secondary phosgene synthesis tower, the phosgene conversion efficiency of the primary phosgene synthesis tower decreases, and the catalyst has been pulverized to an unacceptable degree and must be replaced, and the catalyst lifetime is determined according to the above-mentioned changes.

The technical solutions provided by the present disclosure have the following beneficial effects.

The phosgene synthesis and brine evaporation electrolysis integrated treatment process provided in the present disclosure can achieve rational utilization of energy and resource utilization of effluent brine, thereby achieving overall circular economy and zero emission.

In the preferred schemes of the present disclosure, with the use of the high thermal conductivity composite activated carbon as a catalyst and the loading of the catalyst and an inert agent which are mixed in a specific ratio and in specific shapes, the heat generated in phosgene synthesis can be efficiently removed, thereby avoiding the formation of high temperature hot spots on the surface of the catalyst and prolonging the service life of the activated carbon. Meanwhile, since the reaction heat can be efficiently removed, the heat transfer agent with high temperature can be outputted from the heat transfer agent circulation space of the primary phosgene synthesis tower, and such a high temperature heat transfer agent can exchange heat with water (such as boiler water) in the steam generator to generate low pressure steam with a pressure of 0.2 MPa to 0.6 MPa, medium pressure steam with a pressure of 1.4 MPa to 1.6 MPa, or high pressure steam with a pressure of 2.8 MPa to 3.2 MPa, thereby supplying the steam to the brine evaporation and concentration device to supply sufficient heat source. After evaporation, concentration and crystallization of effluent brine, the obtained dry salt is further electrolyzed in an electrolytic cell to obtain chlorine. Therefore, through the technical schemes of the present disclosure, the integration of phosgene synthesis, brine treatment and chlor-alkali industry three high-consumption processes in MDI production can be achieved, resulting in rational utilization of energy and resource utilization of effluent brine and achieving overall circular economy and zero emission.

BRIEF DESCRIPTION OF DRAWINGS

FIG. 1 is a schematic diagram of the process of Comparative Example 1.

FIG. 2 is a schematic diagram of the process of Examples 1 and 2 of the present disclosure.

FIG. 3 is a simulated diagram of a catalyst and an inert agent loaded in the tube in Comparative Example 1.

FIG. 4 is a simulated diagram of a catalyst and an inert agent loaded in the tube in Examples 1 and 2 and Comparative Example 1.

FIG. 5 is a top view inside a phosgene synthesis tower, including tube distribution and heat transfer agent circulation space.

List of part of reference numbers:

1: Chlorine transfer pipeline; 2: CO transfer pipeline; 3: Mixer; 4. Primary phosgene synthesis tower; 5: Secondary phosgene synthesis tower; 6: Steam generator; 7. Circulating water cooler; 8: Primary evaporator; 9: Primary brine tower; 10: Secondary evaporator; 11: Secondary brine tower; 12: Crystallizer; 13-17: Pipeline; 18: Pump; 19. Cylindrical catalyst; 20: Spherical inert agent; 21: Star-shaped inert agent; 22: Spherical catalyst; 23: Heat transfer agent circulation space; 24. Tower wall of phosgene synthesis tower; 25: Tube.

DETAILED DESCRIPTION

For a better understanding of technical solutions of the present disclosure, the content of the present disclosure is further described below in conjunction with examples but is not limited to the examples set forth below. The test methods not specified in the following examples are conventional methods in the art, and the devices not specified are conventional devices in the art.

Sodium chloride in brine was measured according to Chinese standard GB/T 4348.2-2014.

The content of free chlorine in phosgene was measured in the following manner.

(1) Principle

1% (m/v) potassium iodide is added into collected synthesized phosgene to react with free chlorine ($Cl_2$) in the phosgene, and the obtained iodine is titrated with sodium thiosulfate standard solution.

(2) Reagents and Solutions

Potassium iodide: prepared into 1% (m/v) aqueous solution;

Starch: prepared into 0.5% (m/v) aqueous solution; and

Sodium thiosulfate standard solution: $C(Na_2S_2O_3)$ = 0.01 mol/L.

(3) Measurement

The gas collecting bottle (with a capacity of 1000 ml) including collected phosgene is frozen for about 20 minutes. The gas collecting bottle is connected with a funnel through a latex tube, and then 50 ml of potassium iodide solution is added into the funnel. The valve of the gas collecting bottle is opened to allow the potassium iodide solution enter the gas collecting bottle that is in a negative pressure state after cooling, and then the valve is closed. The gas collecting bottle is shaken for about 5 minutes, and the solution in the gas collecting bottle is transferred into a conical flask with a stopper. The gas collecting bottle is washed with 30 ml of water, and the obtained solution is also transferred into the conical flask. The solution in the conical flask is titrated with sodium thiosulfate standard solution until the solution becomes light yellow, 1 ml of starch solution is then added, and the solution continues to be titrated with sodium thiosulfate standard solution until blue just disappears.

(4) Result calculation

$$Cl = \frac{V_1 \times C \times 35.5}{V_2}$$

in formula, Cl denotes free chlorine content, mg/L (which may be expressed as the free chlorine concentration based on mass (ppm) on the basis of 1 mg/L = 226.66 ppm);

$V_1$ denotes the volume of sodium thiosulfate standard solution consumed in titration of sample, mL;

$V_2$ denotes the volume of a gas sampling bottle, L;

C denotes the actual concentration of sodium thiosulfate standard solution, mol/L.

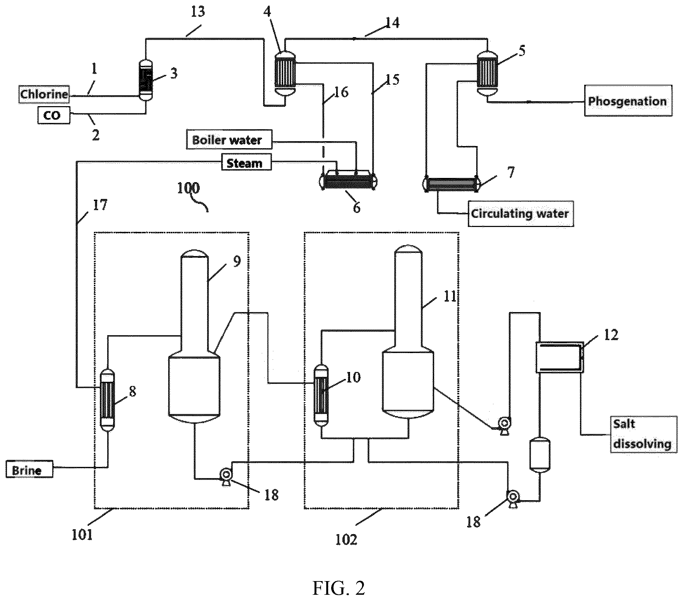

The phosgene synthesis and brine evaporation electrolysis integrated treatment system used in the following examples will be described with reference to FIG. 2.

The phosgene synthesis and brine evaporation electrolysis integrated treatment system mainly includes a mixer 3, a primary phosgene synthesis tower 4, a steam generator 6, a secondary phosgene synthesis tower 5, a circulating water cooler 7, a brine evaporation and concentration device 100, and a crystallizer 12. The mixer 3 is connected with the primary phosgene synthesis tower 4, and the mixer 3 is also connected with the chlorine transfer pipeline 1 and the CO transfer pipeline 2. The mixer 3 is used for mixing chlorine and CO and supplying the mixed chlorine and CO to the primary phosgene synthesis tower 4 through the pipeline 13. The primary phosgene synthesis tower 4 and the secondary phosgene synthesis tower 5 used in the following examples are specifically tubular reaction towers with a tubular diameter of 40 mm, a tubular spacing of 50 mm, and a tubular length of 4000 mm. The catalyst and the inert agent which are evenly mixed are loaded in tubes of the primary phosgene synthesis tower 4 and the secondary phosgene synthesis tower 5, and the heat transfer agent circulates in the heat transfer agent circulation space (the space surrounding the tubes in the primary phosgene synthesis tower) of the primary phosgene synthesis tower 4. With reference to FIG. 5, 24 denotes the wall of the phosgene synthesis tower, 25 denotes the tube arranged in the phosgene synthesis tower, and 23 denotes the heat transfer agent circulation space. The heat transfer agent outlet 27 of the heat transfer agent circulation space communicates with the heat transfer agent inlet (not shown in the figure) of the steam generator 6 through the pipeline 15, the heat transfer agent inlet 26 of the heat transfer agent circulation space communicates with the heat transfer agent outlet (not shown in the figure) of the steam generator 6 through the pipeline 16, and the heat transfer agent circulates between the primary phosgene synthesis tower 4 and the steam generator 6. The heat transfer agent, after absorbing the reaction heat generated in the process of phosgene synthesis in the primary phosgene synthesis tower 4, heats up and flows to the steam generator 6 for heat exchange with boiler water so that the boiler water is converted into superheated steam, and then the heat transfer agent cools and returns to the primary phosgene synthesis tower 4 to continue to participate in the absorption of reaction heat.

The superheated steam outlet (not shown in the figure) of the steam generator 6 is connected with the brine evaporation and concentration device 100, and the superheated steam is supplied to the brine evaporation and concentration device 100 through the pipeline 17 to provide a heat source for the device. The brine evaporation and concentration device 100 is used for evaporating and concentrating effluent brine to obtain strong brine. The brine evaporation and concentration device 100 may be corresponding devices well known in the art, and for example, the double-effect evaporation well known in the art is used in the following examples. For ease of understanding, the double-effect evaporation is described in conjunction with FIG. 2. The double-effect evaporation involves a primary evaporation unit 101 and a secondary evaporation unit 102, each including an evaporator (8/10), a brine tower (9/11) and a pump 18, respectively. The effluent brine first enters the primary evaporator 8 of the primary evaporation unit 101 in which the effluent brine exchanges heat with superheated steam from the steam generator 6, and then enters the primary brine tower 9 in which the obtained primary strong brine is separated from the steam. The steam enters the secondary evaporator 10 of the secondary evaporation unit 102 through a pipeline and serves as a heat source, and the primary strong brine enters the secondary evaporator 10 to exchange heat with the steam again and then enters the secondary brine tower 11. The obtained secondary strong brine enters the crystallizer 12 for crystallization to obtain dry salt. The primary evaporation is performed at a temperature of 130°C (which is the temperature of the primary evaporator 8 and is close to the temperature of the primary brine tower 9) and at a pressure of 2.7 bara (which is the pressure of the primary evaporator 8 and is close to the pressure of the primary brine tower 9). The secondary evaporation temperature is 50°C (which is the temperature of the secondary evaporator 10 and is close to the temperature of the secondary brine tower 11) and at a pressure of 0.12 bara (which is the pressure of the secondary evaporator 10 and is close to the pressure of the secondary brine tower 11). The dry salt is delivered to the downstream procedure for electrolysis to produce chlorine.

The phosgene outlet of the primary phosgene synthesis tower 4 is connected with the secondary phosgene synthesis tower 5 through the pipeline 14. The mixed gas which is outputted from the primary phosgene synthesis tower 4 and includes the phosgene enters the secondary phosgene synthesis tower 5, and the secondary phosgene synthesis tower 5 completely converts the remaining chlorine into phosgene. The tower structure of the secondary phosgene synthesis tower is the same as the tower structure of the primary phosgene synthesis tower, and the difference between the two towers is that the reaction heat is removed with circulating water in the secondary phosgene synthesis tower, that is, what circulates in the space surrounding the tubes in the secondary phosgene synthesis tower is the circulating water, and the space surrounding the tubes communicates with the circulating water cooler 7.

Thermocouples for monitoring hot spot temperature are disposed in the tubes of the primary phosgene synthesis tower.

**Example 1**

This example used a phosgene synthesis and brine evaporation electrolysis integrated treatment process, the by-product steam was produced by using the heat generated in phosgene synthesis, and the effluent brine produced in condensation and phosgenation of MDI production was evaporated by double-effect evaporation to obtain dry salt with the by-product steam produced in phosgene synthesis as the heat source. The process flow is shown in FIG. 2.

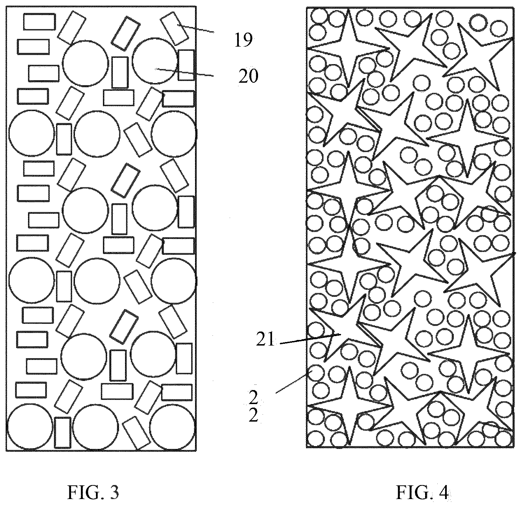

The phosgene synthesis catalyst used in this example was 4GV-S activated carbon produced in Tsurumi, Japan, which was spherical and had a size (diameter) of 8 mm. The inert agent used herein was domestic silicon carbide (produced by BESTRY, Shanghai), which was star-shaped and had a size (equivalent diameter) of 20 mm. Silicon carbide accounted for 75% of the total volume of activated carbon and silicon carbide. The simulated diagram of the catalyst and the inert agent loaded in the tube of the primary phosgene synthesis tower 4 is shown in FIG. 4. The volume ratio of CO to chlorine in phosgene synthesis feed was 1.03. The pressure in the primary phosgene synthesis tower 4 was 3.0 barg, the temperature of the primary phosgene synthesis tower 4 was 220°C, and the free chlorine concentration at the outlet was 1.5%. The pressure in the secondary phosgene synthesis tower 5 was 2.9 barg, the temperature of the secondary phosgene synthesis tower 5 was 60°C, and the free chlorine concentration at the outlet was 34 ppm. The total amount of phosgene produced was 40 t/h. The heat transfer agent in the primary phosgene synthesis tower 4 was high temperature silicone oil (DOW, SL200). The temperature of the high temperature silicone oil at the heat transfer agent outlet of the primary phosgene synthesis tower 4 was 210°C (at a pressure of 2 barg). The high temperature silicone oil was conveyed to the steam generator 6 to generate medium pressure steam, where the pressure of the steam was 14 barg, the temperature of the superheated steam was 195°C, and the flow rate of the by-product steam was 15 t/h. The effluent brine was neutralized with HCl, where the mass concentration of sodium chloride in the neutralized brine was 20%. The neutralized brine was conveyed to the brine evaporation and concentration device 100 for double-effect evaporation. The obtained strong brine was crystallized in the crystallizer 12 to generate dry salt. The dry salt was adjusted to saturated brine and then electrolyzed to generate chlorine. The steam consumption and dry salt yield are shown in Table 1.

**Example 2**

This example used a phosgene synthesis and brine evaporation electrolysis integrated treatment process, the by-product steam was produced by using the heat generated in phosgene synthesis, and the effluent brine produced in condensation and phosgenation of MDI production was evaporated by double-effect evaporation to obtain dry salt with the by-product steam produced in phosgene synthesis as the heat source. The process flow is shown in FIG. 2. The difference of this example from Example 1 is that an inert agent in a different shape and combinations thereof were used in Example 2.

The phosgene synthesis catalyst used in this example was 4GV-S activated carbon produced in Tsurumi, Japan, which was spherical and had a size (diameter) of 8 mm. The inert agent used herein was domestic silicon carbide (produced by BESTRY, Shanghai), which was star cone-shaped and had a size (equivalent diameter) of 18 mm. Silicon carbide accounted for 80% of the total volume of activated carbon and silicon carbide. The volume ratio of CO to chlorine in phosgene synthesis feed was 1.03. The pressure in the primary phosgene synthesis tower 4 was 3.0 barg, the temperature of the primary phosgene synthesis tower 4 was 220°C, and the free chlorine concentration at the outlet was 1.9%. The pressure in the secondary phosgene synthesis tower 5 was 2.9 barg, the temperature of the secondary phosgene synthesis tower 5 was 60°C, and the free chlorine concentration at the outlet was 36 ppm. The total amount of phosgene produced was 40 t/h. The heat transfer agent in the primary phosgene synthesis tower 4 was high temperature silicone oil (DOW, SL200). The temperature of the high temperature silicone oil at the heat transfer agent outlet of the primary phosgene synthesis tower 4 was 210°C (at a pressure of 2 barg). The high temperature silicone oil was conveyed to the steam generator 6 to generate medium pressure steam, where the pressure of the steam was 14 barg, the temperature of the superheated steam was 195°C, and the flow rate of the by-product steam was 15 t/h. The effluent brine was neutralized with HCl, where the mass concentration of sodium chloride in the neutralized brine was 20%. The neutralized brine was conveyed to the brine evaporation and concentration device for double-effect evaporation. The obtained strong brine was crystallized in the crystallizer to generate dry salt. The dry salt was adjusted to saturated brine and then electrolyzed to generate chlorine. The steam consumption and dry salt yield are shown in Table 1.

**Example 3**

This example used a phosgene synthesis and brine evaporation electrolysis integrated treatment process, the by-product steam was produced by using the heat generated in phosgene synthesis, and the effluent brine produced in condensation and phosgenation of MDI production was evaporated by double-effect evaporation to obtain dry salt with the by-product steam produced in phosgene synthesis as the heat source. The difference of this example from Example 1 is that the catalyst was high thermal conductivity composite activated carbon. The process flow is shown in FIG. 2.

The phosgene synthesis catalyst used in this example was high thermal conductivity composite activated carbon. The composite material (particle additive) was alumina, and the mass ratio of alumina to activated carbon was 5:100. The adhesive was emulsified phenolic resin (Shanghai Latex Factory, HX30), and the mass ratio of emulsified phenolic resin to activated carbon was 15:100. The mass ratio of activated carbon to water was 30:100. The above-mentioned components were evenly mixed, formed into a spherical shape with a size (diameter) of 8 mm, dried for 20 hours and then treated with superheated steam at 800°C for 2 hours. The comparison of the lifetime of the activated carbon after used is shown in Table 1. The inert agent used herein was domestic silicon carbide (produced by BESTRY, Shanghai), which was star-shaped and had a size (equivalent diameter) of 20 mm. Silicon carbide accounted for 75% of the total volume of high thermal conductivity composite activated carbon and silicon carbide. The simulated diagram of the catalyst and the inert agent loaded in the tube of the primary phosgene synthesis tower 4 is shown in FIG. 4. The volume ratio of CO to chlorine in phosgene synthesis feed was 1.03. The pressure in the primary phosgene synthesis tower 4 was 3.0 barg, the temperature of the primary phosgene synthesis tower 4 was 220°C, and the free chlorine concentration at the outlet was 1.5%. The pressure in the secondary phosgene synthesis tower 5 was 2.9 barg, the temperature of the secondary phosgene synthesis tower 5 was 60°C, and the free chlorine concentration at the outlet was 34 ppm. The total amount of phosgene produced was 40 t/h. The heat transfer agent in the primary phosgene synthesis tower was high temperature silicone oil (DOW, SL200). The temperature of the high temperature silicone oil at the heat transfer agent outlet of the primary phosgene synthesis tower was 210°C and the pressure was 2 barg. The high temperature silicone oil was conveyed to the steam generator to generate medium pressure steam, where the pressure of the steam was 14 barg, the temperature of the superheated steam was 195°C, and the flow rate of the by-product steam was 15 t/h. The effluent brine was neutralized with HCl, where the mass concentration of sodium chloride in the neutralized brine was 20%. The neutralized brine was conveyed to the brine evaporation and concentration device 100 for double-effect evaporation. The obtained strong brine was crystallized in the crystallizer 12 to generate dry salt. The dry salt was adjusted to saturated brine and then electrolyzed to generate chlorine. The steam consumption and dry salt yield are shown in Table 1.

**Example 4**

This example used a phosgene synthesis and brine evaporation electrolysis integrated treatment process, the by-product steam was produced by using the heat generated in phosgene synthesis, and the effluent brine produced in condensation and phosgenation of MDI production was evaporated by double-effect evaporation to obtain dry salt with the by-product steam produced in phosgene synthesis as the heat source. The difference of this example from Example 3 is that the catalyst was a different type of high thermal conductivity composite activated carbon. The process flow is shown in FIG. 2.

The phosgene synthesis catalyst used in this example was high thermal conductivity composite activated carbon. The composite material (particle additive) was silicon carbide, and the mass ratio of silicon carbide to activated carbon was 10:100. The adhesive was emulsified phenolic resin (Shanghai Latex Factory, HX30), and the mass ratio of emulsified phenolic resin to activated carbon was 20:100. The mass ratio of activated carbon to water was 30:100. The above-mentioned components were evenly mixed, formed into a cylinder with a size (equivalent diameter) of 6 mm, dried for 20 hours and then treated with superheated steam at 800°C for 2 hours. The comparison of the lifetime of the activated carbon after used is shown in Table 1. The inert agent used herein was domestic silicon carbide (produced by BESTRY, Shanghai), which was star-shaped and had a size (equivalent diameter) of 20 mm. Silicon carbide accounted for 75% of the total volume of high thermal conductivity composite activated carbon and silicon carbide. The simulated diagram of the catalyst and the inert agent loaded in the tube of the primary phosgene synthesis tower 4 is shown in FIG. 4. The volume ratio of CO to chlorine in phosgene synthesis feed was 1.03. The pressure in the primary phosgene synthesis tower 4 was 3.0 barg, the temperature of the primary phosgene synthesis tower 4 was 220°C, and the free chlorine concentration at the outlet was 1.4%. The pressure in the secondary phosgene synthesis tower 5 was 2.9 barg, the temperature of the secondary phosgene synthesis tower 5 was 60°C, and the free chlorine concentration at the outlet was 32 ppm. The total amount of phosgene produced was 40 t/h. The heat transfer agent in the primary phosgene synthesis tower 4 was high temperature silicone oil (DOW, SL200). The temperature of the high temperature silicone oil at the heat transfer agent outlet of the primary phosgene synthesis tower 4 was 210°C and the pressure was 2 barg. The high temperature silicone oil was conveyed to the steam generator 6 to generate medium pressure steam, where the pressure of the steam was 14 barg, the temperature of the superheated steam was 195°C, and the flow rate of the by-product steam was 15 t/h. The effluent brine was neutralized with HCl, where the mass concentration of sodium chloride in the neutralized brine was 20%. The neutralized brine was conveyed to the brine evaporation and concentration device 100 for double-effect evaporation. The obtained strong brine was crystallized in the crystallizer 12 to generate dry salt. The dry salt was adjusted to saturated brine, dissolved by chlor-alkali process and then electrolyzed to generate chlorine. The steam consumption and dry salt yield are shown in Table 1.

**Comparative Example 1**

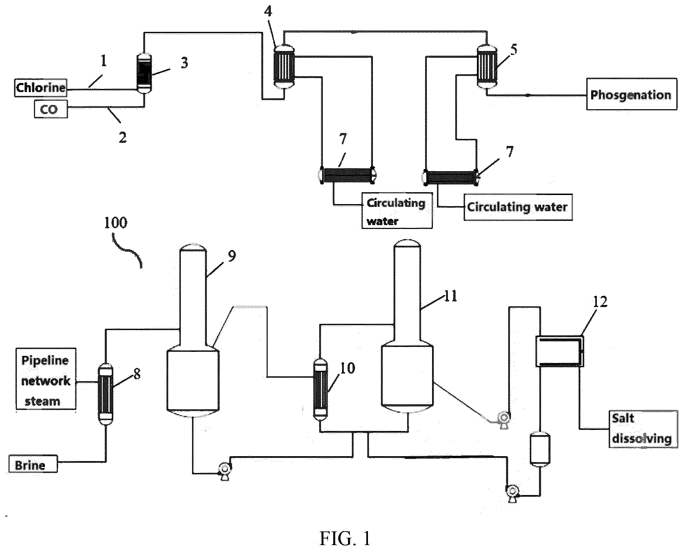

The process flow of this comparative example is shown in FIG. 1. The same part between the process flow of Comparative Example 1 and the process flow shown in FIG. 2 is not described in detail, and the main differences between the two are as follows: in the process flow of FIG. 1, the primary phosgene synthesis tower 4 and the secondary phosgene synthesis tower 5 both used circulating water to remove the reaction heat, no by-product steam was produced, and phosgene production did not involve the brine evaporation and concentration device 100.

Chlorine and carbon monoxide were mixed in the mixer 3 and then entered the primary phosgene synthesizer 4 to be synthesized into phosgene under the action of the catalyst, the heat generated in phosgene synthesis was carried away by circulating water, and the effluent brine produced in condensation and phosgenation of MDI production was evaporated by double-effect evaporation to obtain dry salt with the pipeline network steam as the heat source.

The phosgene synthesis catalyst used in this comparative example was 4GV activated carbon produced in Tsurumi, Japan, which was cylindrical and had a diameter (equivalent cylindrical) of 8 mm. The inert agent used herein was alumina porcelain balls (produced by BESTRY, Shanghai), which was spherical and had a size (equivalent diameter) of 14 mm. The alumina porcelain balls accounted for 60% of the total volume of activated carbon and alumina porcelain balls. The simulated diagram of the catalyst and the inert agent loaded in the tube of the primary phosgene synthesis tower 4 is shown in FIG. 3. The volume ratio of CO to chlorine in phosgene synthesis feed was 1.05. The pressure in the primary phosgene synthesis tower was 3 barg, and the temperature of the primary phosgene synthesis tower 4 was 60°C. The pressure in the secondary phosgene synthesis tower 4 was 3 barg, and the temperature of the secondary phosgene synthesis tower 5 was 60°C (at a pressure of 3 barg). The total amount of phosgene produced was 40 t/h. The heat transfer agent in the primary phosgene synthesis tower 4 was circulating water whose flow rate was shown in Table 1. The temperature of the circulating water was 38°C when the water returned. The free chlorine concentration in phosgene was 40 ppm. The effluent brine was neutralized with HCl, where the mass concentration of sodium chloride in the neutralized brine was 20%. The neutralized brine was conveyed to the brine evaporation and concentration device 100 for double-effect evaporation (the double-effect evaporation was the same as the double-effect evaporation in Example 1 except that the heat source was pipeline network steam rather than the by-product superheated steam of the phosgene synthesis). The obtained strong brine was crystallized in the crystallizer 12 to generate dry salt. The dry salt was adjusted to saturated brine and then electrolyzed to generate chlorine. The steam consumption and dry salt yield are shown in Table 1.

**Comparative Example 2**

This comparative example is basically the same as Example 1 except that the effluent brine produced in condensation and phosgenation of MDI production was discharged into seawater instead of being subjected to double-effect evaporation with by-product superheated steam for obtaining dry salt.

The phosgene synthesis catalyst used in this comparative example was 4GV-S activated carbon produced in Tsurumi, Japan, which was spherical and had a size (diameter) of 8 mm. The inert agent used herein was domestic silicon carbide (produced by BESTRY, Shanghai), which was star-shaped and had a size (equivalent diameter) of 20 mm. Silicon carbide accounted for 75% of the total volume of activated carbon and silicon carbide. The simulated diagram of the catalyst and the inert agent loaded in the tube of the primary phosgene synthesis tower is shown in FIG. 4. The volume ratio of CO to chlorine in phosgene synthesis feed was 1.04. The pressure in the primary phosgene synthesis tower was 3.1 barg, and the temperature of the primary phosgene synthesis tower was 205°C. The pressure in the secondary phosgene synthesis tower was 3 barg, and the temperature of the secondary phosgene synthesis tower was 60°C. The total amount of phosgene produced was 40 t/h. The heat transfer agent in the primary phosgene synthesis tower was decalin. The temperature of decalin at the heat transfer agent outlet of the primary phosgene synthesis tower was 198°C. The decalin was conveyed to the steam generator to generate medium pressure steam, where the pressure of the steam was 14 barg, the temperature of the superheated steam was 195°C, and the flow rate of the by-product steam was 15 t/h. The free chlorine content in phosgene was 40 ppm. The effluent brine was neutralized with HCl, the concentration after neutralization was 20%, and the neutralized brine was discharged into seawater.

**Comparative Example 3**

The process flow of this comparative example is shown in FIG. 2.

The difference of this comparative example from Example 1 is that no shaped-modified inert agent was used in Comparative Example 3. This comparative example used a phosgene synthesis and brine evaporation electrolysis integrated treatment process, the by-product steam was produced by using the heat generated in phosgene synthesis, and the effluent brine produced in condensation and phosgenation of MDI production was evaporated by double-effect evaporation to obtain dry salt with the by-product steam produced in phosgene synthesis as the heat source. The process flow is shown in FIG. 2.

The phosgene synthesis catalyst used in this example was 4GV-S activated carbon produced in Tsurumi, Japan, which was spherical and had a size (diameter) of 8 mm. The inert agent used herein was domestic silicon carbide (produced by BESTRY, Shanghai), which was spherical and had a size (diameter) of 10 mm. Silicon carbide accounted for 75% of the total volume of activated carbon and silicon carbide. The volume ratio of CO to chlorine in phosgene synthesis feed was 1.03. The pressure in the primary phosgene synthesis tower was 3.0 barg, the temperature of the primary phosgene synthesis tower was 220°C, and the free chlorine concentration at the outlet was 1.5%. The pressure in the secondary phosgene synthesis tower was 2.9 barg, the temperature of the secondary phosgene synthesis tower was 60°C, and the free chlorine concentration at the outlet was 34 ppm. The total amount of phosgene produced was 40 t/h. The heat transfer agent in the primary phosgene synthesis tower was high temperature silicone oil (DOW, SL200). The temperature of the high temperature silicone oil at the heat transfer agent outlet of the primary phosgene synthesis tower was 210°C. The high temperature silicone oil was conveyed to the steam generator to generate medium pressure steam, where the pressure of the steam was 14 barg, the temperature of the superheated steam was 195°C, and the flow rate of the by-product steam was 15 t/h. The effluent brine was neutralized with HCl, where the mass concentration of sodium chloride in the neutralized brine was 20%. The neutralized brine was conveyed to the brine evaporation and concentration device for double-effect evaporation. The obtained strong brine was crystallized in the crystallizer to generate dry salt. The dry salt was adjusted to saturated brine and then electrolyzed to generate chlorine. The steam consumption and dry salt yield are shown in Table 1.

Table 1 Experimental result comparison

| | By-product steam amount (t/h) | Pipeline network steam consumption (t/h) | Circulating water consumption in the primary phosgene synthesis tower (m³/h) | Brine discharge amount (m³/h) | Dry slat yield (t/h) | Highest hot spot temperature (°C) | Catalyst lifetime (year) |
|---|---|---|---|---|---|---|---|
| Comparative Example 1 | 0 | 15 | 800 | 0 | 16 | 403 | 0.80 |
| Comparative Example 2 | 15 | 0 | 0 | 80 | 0 | 480 | 0.70 |
| Comparative Example 3 | 15 | 0 | 0 | 0 | 0 | 650 | 0.2 |
| Example 1 | 15 | 0 | 0 | 0 | 16 | 420 | 0.78 |
| Example 2 | 15 | 0 | 0 | 0 | 16 | 405 | 0.82 |
| Example 3 | 15 | 0 | 0 | 0 | 16 | 360 | 1.20 |
| Example 4 | 15 | 0 | 0 | 0 | 16 | 320 | 1.40 |

Note: All the experiments involved in Table 1 were carried out under the conditions of phosgene synthesis amount of 40 t/h and effluent brine total amount of 30 m³/h.

As can be seen from the above table, the phosgene synthesis and brine evaporation electrolysis integrated treatment process has remarkable effects on reducing steam consumption, reducing circulating water consumption, reducing brine discharge, and increasing dry salt yield. As can be seen from Comparative Example 3 and Examples 1 to 2, for activated carbon catalysts that were not modified, when an inert agent in a shape without any tips was used in the phosgene synthesis and brine evaporation electrolysis integrated treatment process, the catalyst lifetime was significantly shortened, and the hot spot temperature was high; in Examples 1 to 2 in which the inert agent in a shape with tips was used, the hot spot temperature in Examples 1 to 2 was significantly lower the hot spot temperature in Comparative Example 3, and the catalyst lifetime was significantly longer than the catalyst lifetime in Comparative Example 3. The catalyst lifetime and hot spot temperature of Comparative Example 1 in which no by-product steam was produced approximate to the catalyst lifetime and hot spot temperature of Example 1 to 2. As can be seen from Examples 1 to 4, when an inert agent in a shape with tips and a composite activated carbon catalyst were used, the catalyst life was longer, leading to the long-term stable production process, and the hot spot temperature can be greatly reduced and the catalyst lifetime can be prolonged.

Those skilled in the art will understand that some modifications or adaptations may be made to the present invention based on the teachings of the description. These modifications or adaptations should fall within the scope as defined by the claims of the present invention.

**Claims**

1. A phosgene synthesis and brine evaporation electrolysis integrated treatment process, comprising the following steps:

   1) introducing premixed CO and chlorine to a primary phosgene synthesis tower, and reacting CO and chlorine to synthesize phosgene under the action of a catalyst; wherein the primary phosgene synthesis tower is provided with a heat transfer agent circulation space, a heat transfer agent circulates in the heat transfer agent circulation space for absorbing reaction heat generated in phosgene synthesis, and the catalyst is activated carbon or high thermal conductivity composite activated carbon, preferably high thermal conductivity composite activated carbon;
   2) introducing the heat transfer agent, which absorbs the reaction heat, in the heat transfer agent circulation space to a steam generator, exchanging heat with water to be converted into steam to generate a superheated steam, and returning the heat transfer agent which has exchanged heat with the water to be converted into steam to the heat transfer agent circulation space of the primary phosgene synthesis tower for further absorbing the reaction heat generated in phosgene synthesis;
   3) supplying the superheated steam obtained in step 2) to a brine evaporation and concentration device, and performing, through the brine evaporation and concentration device, evaporation and concentration on brine by using the superheated steam as a heat source to obtain strong brine; optionally, the strong brine is crystallized to obtain dry salt; and
   4) electrolyzing the strong brine or dry salt obtained in step 3) to generate chlorine.

2. The phosgene synthesis and brine evaporation electrolysis integrated treatment process according to claim 1, wherein in step 1), a mixed gas which is obtained in the primary phosgene synthesis tower and contains the phosgene is inputted into a secondary phosgene synthesis tower.

3. The phosgene synthesis and brine evaporation electrolysis integrated treatment process according to claim 2, wherein a catalyst loading area in each of the primary phosgene synthesis tower and the secondary phosgene synthesis tower is loaded with the catalyst and an inert agent which are evenly mixed, and the material of the inert agent is selected from one or at least two of silicon carbide, alumina or graphite, preferably silicon carbide;

   wherein an appearance shape of the inert agent is square columnar, cylindrical, spherical, star cone-shaped, spindle-shaped, intalox saddle-shaped, star-shaped or other shapes, preferably, a surface of the inert agent is provided with one or more acute-angled tips, and more preferably, the surface of the inert agent is distributed with a plurality of acute-angled tips; an equivalent diameter of the inert agent is preferably 1 mm to 20 mm; preferably, a volume of the inert agent loaded in the catalyst loading area accounts for 0.1 to 0.9, further preferably 0.7 to 0.85, of the total volume of the inert agent and the catalyst.

4. The phosgene synthesis and brine evaporation electrolysis integrated treatment process according to any one of claims 1 to 3, wherein the high thermal conductivity composite activated carbon comprises a particle additive and activated carbon, and a mass ratio of the particle additive to the activated carbon is (1 to 10): 100; the particle additive is selected from one or at least two of alumina, silicon carbide, graphite and boron carbide; preferably, the high thermal conductivity composite activated carbon is prepared by a method comprising the following steps: evenly mixing an activated carbon powder, the particle additive, and an adhesive in water, drying and molding the mixture, and carbonizing the molded mixture at a constant temperature with water vapor at 600°C to 800°C; further preferably, a mass ratio of the adhesive to the activated carbon powder is (3 to 20):100, and a mass ratio of the activated carbon powder to water is (20 to 50): 100.

5. The phosgene synthesis and brine evaporation electrolysis integrated treatment process according to any one of claims 1 to 4, wherein an appearance shape of the catalyst is cylindrical, spherical, square columnar, spindle-shaped, star cone-shaped or other shapes; preferably, an equivalent diameter of the catalyst is 1 mm to 10 mm.

6. The phosgene synthesis and brine evaporation electrolysis integrated treatment process according to any one of claims 1 to 5, wherein in step 1), the heat transfer agent is selected from water, chlorobenzene, toluene, decalin, high temperature silicone oil or high temperature mineral oil, preferably high temperature silicone oil or decalin.

7. The phosgene synthesis and brine evaporation electrolysis integrated treatment process according to any one of claims 1 to 6, wherein in step 2), the heat transfer agent which absorbs the reaction heat and is outputted from the heat transfer agent circulation space is at a temperature of 130°C to 265°C, preferably 190°C to 220°C, and at a pressure of -0.5 barg to 5 barg.

8. The phosgene synthesis and brine evaporation electrolysis integrated treatment process according to any one of claims 1 to 7, wherein in step 2), the superheated steam is at a pressure of 2 barg to 35 barg, preferably 8 barg to 10 barg, and at a temperature of 150°C to 260°C, preferably 180°C to 200°C.

9. The phosgene synthesis and brine evaporation electrolysis integrated treatment process according to any one of claims 2 to 8, wherein a volume ratio of CO to chlorine in step 1) is 1.01 to 1.10, preferably 1.015 to 1.03; and/or in step 1), the primary phosgene synthesis tower and the secondary phosgene synthesis tower are tubular phosgene synthesis towers with a tubular diameter of 20 mm to 80 mm, a tubular spacing of 25 mm to 100 mm, and a tubular length of 3000 mm to 4500 mm.

10. The phosgene synthesis and brine evaporation electrolysis integrated treatment process according to any one of claims 2 to 9, wherein in step 1), the primary phosgene synthesis tower is at a temperature of 55°C to 270°C, preferably 200°C to 230°C, and at a pressure of 2.5 barg to 5.5 barg, preferably 2.5 barg to 3.5 barg; the secondary phosgene synthesis tower is at a temperature of 50°C to 60°C and at a pressure of 2.5 barg to 5.5 barg.

11. The phosgene synthesis and brine evaporation electrolysis integrated treatment process according to any one of claims 2 to 10, wherein in step 1), a free chlorine concentration at the outlet of the primary phosgene synthesis tower is 50 ppm to 3%, and the free chlorine concentration at the outlet of the secondary phosgene synthesis tower is 20 ppm to 50 ppm.

12. The phosgene synthesis and brine evaporation electrolysis integrated treatment process according to any one of claims 1 to 11, wherein in step 3), the brine which is subjected to evaporation and concentration in the brine evaporation and concentration device is effluent brine, such as a condensed brine which is generated in condensation reaction and whose aqueous layer is separated or a phosgenation brine formed by neutralizing an alkali liquor discharged from an alkali liquor absorption tower.

13. The phosgene synthesis and brine evaporation electrolysis integrated treatment process according to any one of claims 1 to 12, wherein in step 3), the evaporation and concentration are performed by double-effect evaporation, wherein a primary evaporation is performed at a temperature of 50°C to 130°C and at a pressure of 0.1 bara to 3.0 bara, and a secondary evaporation is performed at a temperature of 35°C to 100°C and at a pressure of 0.05 bara to 1.0 bara.

FIG. 1

FIG. 2

19

20

21

2
2

FIG. 3                                    FIG. 4

FIG. 5

## INTERNATIONAL SEARCH REPORT

| | |
|---|---|
| International application No. | |
| | **PCT/CN2019/104073** |

**A.    CLASSIFICATION OF SUBJECT MATTER**

C01B 32/80(2017.01)i;   B01J 27/224(2006.01)i;   C02F 1/16(2006.01)i

According to International Patent Classification (IPC) or to both national classification and IPC

**B.    FIELDS SEARCHED**

Minimum documentation searched (classification system followed by classification symbols)

C01B32; B01J27; C02F1

Documentation searched other than minimum documentation to the extent that such documents are included in the fields searched

Electronic data base consulted during the international search (name of data base and, where practicable, search terms used)

EPODOC; WPI; CNTXT; CNPAT; CNKI; Elsevier: 光气, 氯气, 一氧化碳, 活性炭, 活性碳, 移热剂, 热介质, 盐水, 蒸汽, 蒸发, 结晶, 电解, phosgene, chlorine, CO, carbon monoxide, activated charcoal, activated carbon, heat carrier, heat remover, cooler, cooling agent, brine, saline, salt, steam, +vapor+, crystal, electro+

**C.    DOCUMENTS CONSIDERED TO BE RELEVANT**

| Category* | Citation of document, with indication, where appropriate, of the relevant passages | Relevant to claim No. |
|---|---|---|
| Y | US 4764308 A (BAYER AG) 16 August 1988 (1988-08-16)<br>description, column 2, line 36 to column 6, line 10 | 1-13 |
| Y | CN 102633398 A (HYFLUX FILTERING TECHNOLOGY (SHANGHAI) CO., LTD.) 15 August 2012 (2012-08-15)<br>description paragraphs 0005-0006, 0020, 0046-0050 | 1-13 |
| Y | CN 104415770 A (WANHUA CHEMICAL GROUP CO., LTD. et al.) 18 March 2015 (2015-03-18)<br>description paragraphs 0020-0033, figure 1 | 1-13 |
| A | CN 1765740 A (BAYER MATERIALSCIENCE AG) 03 May 2006 (2006-05-03)<br>entire document | 1-13 |
| A | CN 105197931 A (QINGDAO UNIVERSITY OF SCIENCE AND TECHNOLOGY et al.) 30 December 2015 (2015-12-30)<br>entire document | 1-13 |
| A | EP 0003530 A1 (STAUFFER CHEMICAL CO.) 22 August 1979 (1979-08-22)<br>entire document | 1-13 |

☐ Further documents are listed in the continuation of Box C.    ☑ See patent family annex.

| | |
|---|---|
| *        Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **22 May 2020** | **28 May 2020** |

| Name and mailing address of the ISA/CN | Authorized officer |
|---|---|
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/104073**

| Patent document cited in search report | | | Publication date (day/month/year) | Patent family member(s) | | | Publication date (day/month/year) |
|---|---|---|---|---|---|---|---|
| US | 4764308 | A | 16 August 1988 | EP | 0134506 | A3 | 16 September 1987 |
| | | | | ES | 534678 | A0 | 16 April 1985 |
| | | | | ES | 8504627 | A1 | 16 April 1985 |
| | | | | EP | 0134506 | B1 | 22 March 1989 |
| | | | | BR | 8403747 | A | 02 July 1985 |
| | | | | JP | H0567566 | B2 | 27 September 1993 |
| | | | | DE | 3327274 | A1 | 07 February 1985 |
| | | | | MX | 167421 | B | 22 March 1993 |
| | | | | CA | 1236115 | A | 03 May 1988 |
| | | | | JP | S6042214 | A | 06 March 1985 |
| | | | | EP | 0134506 | A2 | 20 March 1985 |
| | | | | ES | 534678 | D0 | 16 April 1985 |
| CN | 102633398 | A | 15 August 2012 | None | | | |
| CN | 104415770 | A | 18 March 2015 | WO | 2015027686 | A1 | 05 March 2015 |
| | | | | EP | 3038745 | A4 | 05 July 2017 |
| | | | | EP | 3038745 | B1 | 25 July 2018 |
| | | | | CN | 104415770 | B | 31 August 2016 |
| | | | | HU | E040294 | T2 | 28 March 2019 |
| | | | | US | 9399582 | B2 | 26 July 2016 |
| | | | | US | 2016137511 | A1 | 19 May 2016 |
| | | | | EP | 3038745 | A1 | 06 July 2016 |
| CN | 1765740 | A | 03 May 2006 | CN | 1765740 | B | 27 October 2010 |
| | | | | EP | 1640341 | B1 | 16 December 2009 |
| | | | | PT | 1640341 | E | 09 February 2010 |
| | | | | TW | 200621632 | A | 01 July 2006 |
| | | | | DE | 502005008700 | D1 | 28 January 2010 |
| | | | | DE | 102004041777 | A1 | 02 March 2006 |
| | | | | BR | PI0503441 | A | 11 April 2006 |
| | | | | US | 2006047170 | A1 | 02 March 2006 |
| | | | | SG | 120299 | A1 | 28 March 2006 |
| | | | | RU | 2404920 | C2 | 27 November 2010 |
| | | | | EP | 1640341 | A3 | 27 September 2006 |
| | | | | EP | 1640341 | A2 | 29 March 2006 |
| | | | | US | 7442835 | B2 | 28 October 2008 |
| | | | | AT | 452108 | T | 15 January 2010 |
| | | | | JP | 2006062957 | A | 09 March 2006 |
| | | | | RU | 2005126974 | A | 10 March 2007 |
| | | | | KR | 20060050684 | A | 19 May 2006 |
| CN | 105197931 | A | 30 December 2015 | None | | | |
| EP | 0003530 | A1 | 22 August 1979 | CA | 1118787 | A | 23 February 1982 |
| | | | | BR | 7900572 | A | 11 September 1979 |
| | | | | DE | 2962860 | D1 | 08 July 1982 |
| | | | | YU | 19179 | A | 31 December 1983 |
| | | | | US | 4231959 | A | 04 November 1980 |
| | | | | IL | 56366 | D0 | 12 March 1979 |
| | | | | MX | 151277 | A | 31 October 1984 |
| | | | | IT | 7947987 | D0 | 13 February 1979 |
| | | | | DD | 142033 | A5 | 04 June 1980 |
| | | | | AU | 4314879 | A | 23 August 1979 |

Form PCT/ISA/210 (patent family annex) (January 2015)

**INTERNATIONAL SEARCH REPORT**
Information on patent family members

International application No.

**PCT/CN2019/104073**

| Patent document cited in search report | Publication date (day/month/year) | Patent family member(s) | | Publication date (day/month/year) |
|---|---|---|---|---|
| | | AU | 519336 B2 | 26 November 1981 |
| | | ZA | 7900657 B | 26 March 1980 |
| | | CS | 220769 B2 | 29 April 1983 |
| | | ZA | 7900657 A | 26 March 1980 |
| | | EP | 0003530 B1 | 19 May 1982 |
| | | RO | 79844 A | 09 September 1982 |
| | | ES | 477757 A1 | 01 April 1980 |
| | | PL | 213452 A1 | 03 December 1979 |
| | | IN | 151511 B | 07 May 1983 |
| | | DK | 65779 A | 16 August 1979 |
| | | JP | S54114494 A | 06 September 1979 |
| | | AR | 230040 A1 | 29 February 1984 |
| | | IL | 56366 A | 30 July 1982 |
| | | IT | 1114498 B | 27 January 1986 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104415770 A

- CN 1765740 A